# EUROPEAN PATENT SPECIFICATION

(11) **EP 3 702 791 B1**
(45) Date of publication and mention of the grant of the patent: **24.05.2023**
(21) Application number: 20159232.6
(22) Date of filing: 25.02.2020
(51) Int. Cl.: G01P 3/487, G01P 3/486, B65H 54/74, B65H 63/036

(54) **WINDING ROLLER WITH SPEED MEASURING UNIT AND TEXTILE MACHINE USING THE SAME**
WICKELROLLE MIT GESCHWINDIGKEITSMESSEINHEIT UND TEXTILMASCHINE DAMIT
ROULEAU D'ENROULEMENT COMPORTANT UNE UNITÉ DE MESURE DE VITESSE ET MACHINE TEXTILE L'UTILISANT

(30) Priority: 27.02.2019 CN 201910147777
(43) Date of publication of application: 02.09.2020
(73) Proprietor: Saurer (Jiangsu) Textile Machinery Co. Ltd., 215024 Suzhou Jiangsu Province (CN)
(72) Inventor: Wu, Yunfeng, Suzhou, Jiangsu 215001 (CN)
(74) Representative: Morgenthum-Neurode, Mirko

(56) References cited:
- CN-A- 101 651 397
- US-A- 4 866 269
- US-A- 5 184 069
- US-A1- 2002 158 543
- US-A1- 2007 114 861

## Description

The present invention relates to the field of textile machines, and particularly to an improvement of a winding roller motor of a textile machine.

The existing textile machine, such as a rotor spinning machine, a twisting machine and a vortex spinning machine, usually each comprises a plurality of spinning stations arranged side by side, wherein each station comprises an independent processing unit (e.g., a spinner, a twisting spindle, and the like) for processing yarns, and usually each station finally winds the yarns on an empty paper tube (bobbin) to form a yarn package, while an empty bobbin is generally driven to rotate by a winding roller in contact with the empty bobbin. In the existing textile machine, the winding rollers for driving the bobbins to rotate at a plurality of stations are usually connected and collectively driven by a single shaft. However, during this collective driving, once a yarn breakage or other conditions occur in a station and the spinning is stopped, the winding roller at that station still rotates normally since it is connected to other stations and driven collectively. On the one hand, the energy consumption is increased due to the idling of the winding roller, and on the other hand, since the winding roller still rotates normally, a broken yarn may wind around the driving roller, and it is adverse to a separate control of each station.

Document US 2002/158543 A1 discloses a winding roller according to the preamble of claim 1.

Document CN 101 651 397 A shows an electric motor employed in a textile machine, in which a rotor position sensor and an additional speed sensor are provided, wherein the central shaft is acting as the rotor.

Document US 2007/114861 A1 concerns a motor with an external rotor, suitable for textile spindles, and provides a solution by which the rotor speed is indirectly determined from the motor EMF.

Thus, it is necessary to improve the driving of the winding roller of the existing textile machine.

An objective of the present invention is to provide a winding roller capable of separately driving a yarn bobbin to rotate.

Another objective of the present invention is to provide a textile machine using a separate winding roller to drive a yarn bobbin at each station.

In order to achieve the above objective, the present invention provides a winding roller having the features of claim 1.

According to one embodiment of the present invention, the rotating part comprises a fixed seat which is fixed on the inner wall of the drum casing and provided with the first speed measuring element; and the fixed part comprises a circuit board which is fixed on the fixed shaft perpendicular to the longitudinal axis of the fixed shaft, and provided with the second speed measuring element.

According to one embodiment of the present invention, the fixed seat of the rotating part is a circular ring perpendicular to the inner wall of the drum casing.

According to one embodiment of the present invention, the winding roller of the textile machine further comprises a speed measuring shaft sleeve disposed to sleeve the fixed shaft, and the circuit board is mounted on the speed measuring shaft sleeve.

According to one embodiment of the present invention, the first speed measuring element and the second speed measuring element are proximity switch type speed measuring elements.

According to one embodiment of the present invention, the first speed measuring element on the fixed seat of the rotating part is a magnet, and the second speed measuring element on the circuit board of the fixed part is a Hall element that outputs different signals by sensing a magnetic field change of the magnet.

According to one embodiment of the present invention, the first speed measuring element on the fixed seat of the rotating part is a reflective sheet, the second speed measuring element on the circuit board of the fixed part comprises a light signal transmitter and a reflected light receiver, and the reflected light receiver outputs different signals according to whether a light signal reflected by the reflective sheet is received or not.

According to one embodiment of the present invention, the number of the first speed measuring elements is differently set based on detection accuracy requirements.

In order to achieve another objective, the present invention provides a textile machine, comprising a plurality of spinning stations arranged side by side, each station comprising a bobbin for winding yarns and a winding roller for driving the bobbin to rotate, characterized in that the bobbin at each spinning station is separately driven by an independent winding roller which is the winding roller as mentioned above.

The winding roller of the textile machine of the present invention is a winding roller motor formed by a drum casing having a built-in motor; the yarn bobbin at each station is separately driven by such winding roller having the built-in motor, so as to prevent the situation that the yarn bobbins at all of the existing stations are collectively driven and the winding rollers continuously idle when a certain station is failed, and the winding quality at each station can be flexibly controlled. In addition, the winding roller motor has a built-in speed measuring unit with a simple structure and capable of monitoring the rotation speed of the winding roller in real time, which is convenient for adjusting and controlling the winding tension of the yarn bobbin and ensuring the quality of the yarns
Fig. 1 is a partial structural diagram of a single station of a textile machine according to an embodiment of the present invention.
Fig. 2 is a cross-sectional structural diagram of a winding roller of a textile machine according to an embodiment not covered by the present invention.
Fig. 3 is a structural diagram of a fixed shaft of a winding roller of a textile machine according to an embodiment of the present invention.
Fig. 4 is a structural diagram of a motor stator of a winding roller of a textile machine according to an embodiment of the present invention.
Fig. 5 is a structural diagram of an end cap of a winding roller of a textile machine according to an embodiment of the present invention.
Fig. 6 is a structural diagram of a motor rotor of a winding roller of a textile machine according to an embodiment of the present invention.
Fig. 7 is a structural diagram of a speed measuring magnetic ring of a winding roller of a textile machine according to an embodiment of the present invention.
Fig. 8 is a cross-sectional structural diagram of a winding roller of a textile machine according to another embodiment of the present invention.
Fig. 9 is a structural diagram of a rotating part of a speed measuring unit of a winding roller of a textile machine according to another embodiment of the present invention.
Fig. 10 is a cross-sectional structural diagram of a winding roller of a textile machine according to still another embodiment not covered by the present invention.
Fig. 11 is a structural diagram of an end cap of a winding roller of a textile machine according to an embodiment of the present invention.
Fig. 12 is a cross-sectional structural diagram of a winding roller of a textile machine according to another embodiment of the present invention.
Fig. 13 is a cross-sectional structural diagram of a winding roller of a textile machine according to still another embodiment of the present invention.
Fig. 14 is a cross-sectional structural diagram of a winding roller of a textile machine according to yet another embodiment of the present invention.

The present invention is directed to a textile machine, which uses a winding roller to drive a bobbin to rotate so as to wind yarns onto the bobbin, such as a rotor spinning machine, a twisting machine, an air-jet vortex spinning machine, etc., and the structure of the present invention will be described below using only a rotor spinning machine as an example.

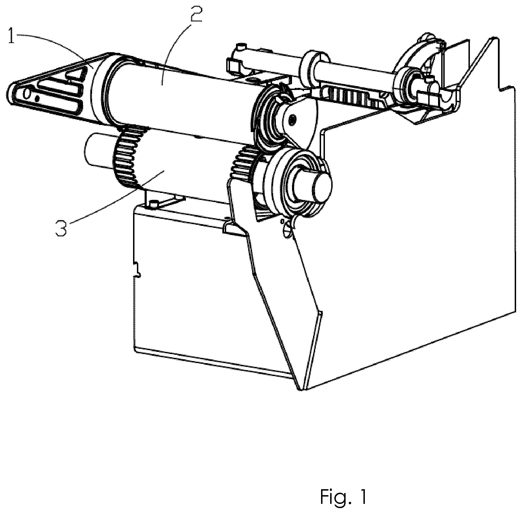

The rotor spinning machine of the present invention comprises a plurality of rows of identical stations arranged side by side, and please refer to Fig. 1, which illustrates only a partial structural diagram of a single station of the rotor spinning machine of the present invention. Each station comprises a cradle 1 for holding a bobbin, a bobbin 2 held between the cradles 1 to wind a yarn, and a winding roller 3 in contact with the bobbin 2 to drive the bobbin to rotate.

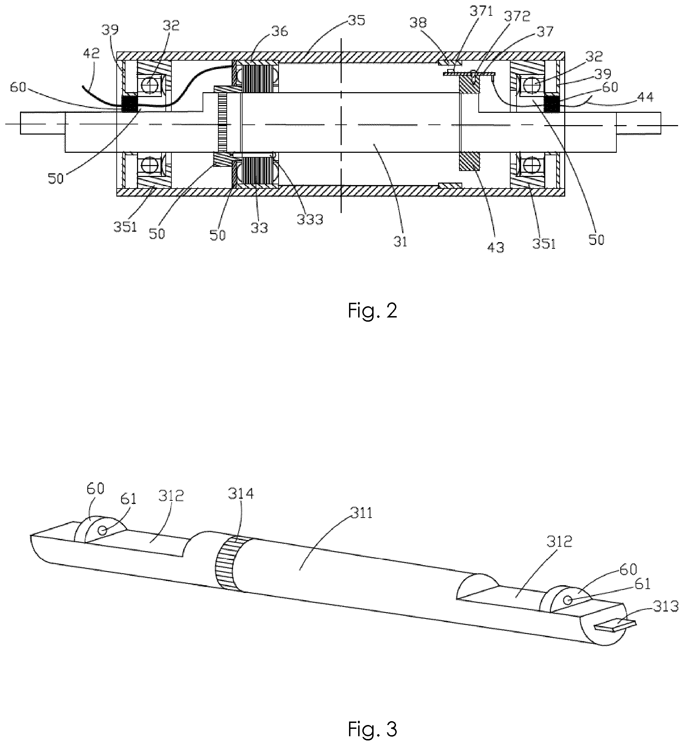

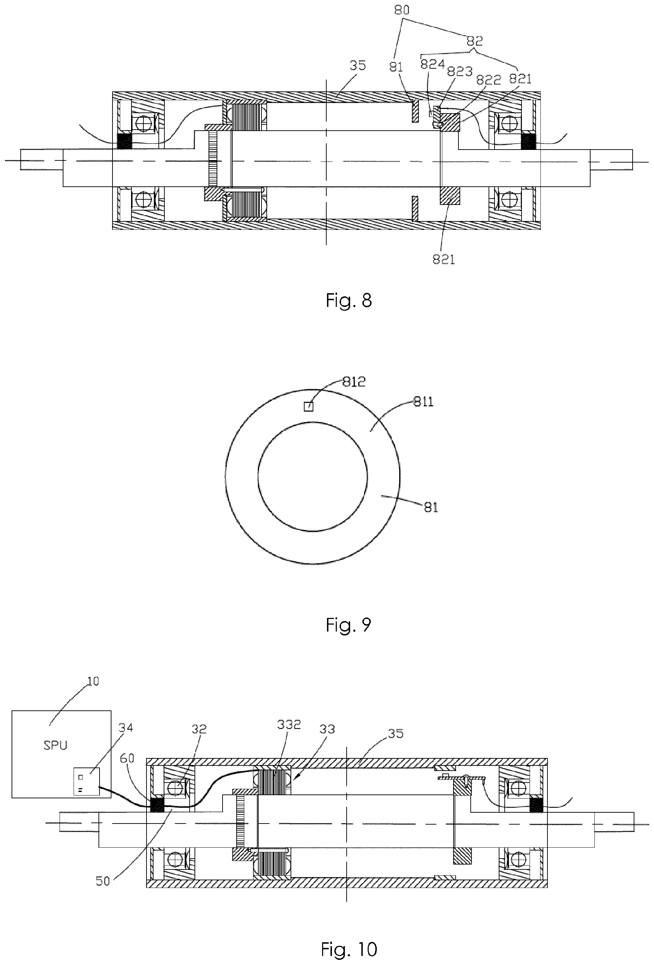

The embodiments as shown in the Figures 2 and 10 are not encompassed by the wording of the claims, but are considered as useful for the understanding of the present invention.

As mentioned above, in the existing rotor spinning machine, the winding rollers of a plurality of stations are driven by one shaft to rotate simultaneously, while in the textile machine of the present invention, the winding roller 3 of each station is a winding roller motor that can be driven separately. Please refer to Fig. 2, which illustrates a cross-sectional structural diagram of a winding roller 3 of a textile machine according to an embodiment not covered by the present invention. In this embodiment, the winding roller 3 of the present invention mainly comprises a fixed shaft 31, two bearings 32 disposed to sleeve both ends of the fixed shaft 31, a motor stator 33 and a driving circuit board 34 of the motor stator fixed on the fixed shaft, a drum casing 35 mounted outside outer rings of the bearings, a motor rotor 36 mounted on an inner wall of the drum casing 35 and corresponding to the motor stator 33, a speed measuring circuit board 37 fixed on the fixed shaft, a speed measuring magnetic ring 38 mounted on the inner wall of the drum casing 35 and corresponding to the speed measuring circuit board 37, and end caps 39 disposed on the fixed shaft 31 at the outer side of the two bearings 32 to close the drum casing 35.

Please still refer to Fig. 2 and in conjunction with Fig. 3, wherein the fixed shaft 31 comprises a cylindrical middle section 311 with a larger diameter in a middle thereof, cut-out sections 312 extending from the middle section 311 to both sides, with surfaces partially cut off along a longitudinal direction of the fixed shaft, and fixed sections 313 extending from the cut-out sections 312, wherein knurling 314 is provided at the middle section of the fixed shaft close to one end.

Please still refer to Fig. 2, one end of the middle section of the fixed shaft 31 is press-fitted with a stator shaft sleeve 41, which is press-fitted at a position in the middle section 311 of the fixed shaft 31 where the knurling 314 is provided.

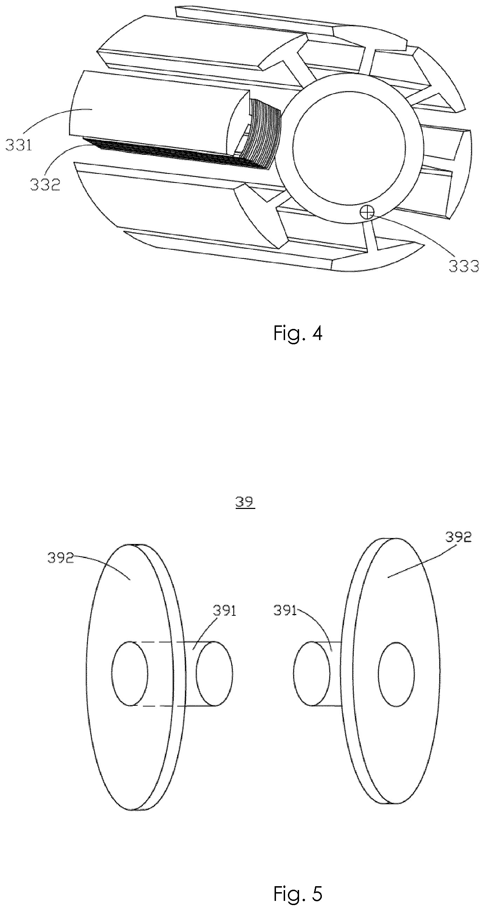

Please refer to Figs. 2 and 4, the motor stator 33 comprises magnetic steel 331 and a stator coil 332 wound on the magnetic steel 331; at least one screw 333 penetrating the magnetic steel 331 in a longitudinal direction is provided on the magnetic steel 331 of the motor stator, and the motor stator 33 is fixed on the stator shaft sleeve 41 by the screw 333.

The stator shaft sleeve 41 is fixed with an annular driving circuit board 34 of the motor stator for controlling the energization of the stator coil 332; one end of the annular driving circuit board 34 of the motor stator is connected to the motor stator coil 332, and the other end is connected to a control unit (not illustrated) outside the motor through a lead 42.

Please still refer to Fig. 2, the other end of the middle section of the fixed shaft 31 is provided with a speed measuring shaft sleeve 43, which is press-fitted and fixed on the fixed shaft 31; an outer surface of the speed measuring shaft sleeve 43 is fixed with a speed measuring circuit board 37 by a screw; and the speed measuring circuit board 37 is provided with a speed measuring element 371 and is connected to a control unit (not illustrated) outside the motor through a lead 44. Since the stator coil of the motor stator generates heat after being energized, the speed measuring unit is disposed at a position far away from the motor stator, so that the speed measuring effect of the speed measuring unit can be prevented from being influenced by the heat generated by the motor stator; and the specific far-away position depends on the power, the heat generation condition of the motor stator, etc., so long as the heat generated by the motor stator does not influence the speed measurement of the speed measuring unit.

Please still refer to Figs. 2 and 3, wherein a diameter of the inner race of the bearing 32 disposed to sleeve the fixed shaft 31 is equivalent to a diameter of the middle section 311 of the fixed shaft 31. Please refer to Fig. 2, the two bearings 32 are disposed to sleeve the cut-out sections 312 of the fixed shaft 31, respectively; since the cut-out section 312 of the fixed shaft 31 is obtained by cutting out a part of a shaft body from the cylindrical middle section 311, a gap 50 is formed between the inner race of the bearing 32 and the cut-out section 312 of the fixed shaft, so that the lead 42 of the driving circuit board 34 of the motor stator and the lead 44 of the speed measuring circuit board 37 can pass through the gap 50 between the bearing 32 and the fixed shaft 31. A bearing seat 351 is fixed between the outer ring of the bearing 32 and the inner wall of the drum casing 35 of the winding roller, and the outer ring of the bearing 32 is connected fixedly to the inner wall of the drum casing 35 through the bearing seat 351.

Please still refer to Figs. 2 and 3, the cut-out section of the fixed shaft 31 is provided with a semi-circular seal 60 which, together with the cut-out section 312 of the fixed shaft 31, just form a cylinder with a diameter equivalent to the diameter of the complete cylinder of the middle section 311 of the fixed shaft 31; the seal 60 may be made of plastics or plastic cement, and the seal 60 is provided with an opening 61 through which a lead can pass.

At both ends of the fixed shaft 31 of the winding roller 3, two end caps 39 are press-fitted at the outer side of the bearing 32; please refer to Figs. 5 and 2, each end cap 39 comprises a shaft sleeve section 391 disposed to sleeve the fixed shaft, and a drum sealing section 392 for sealing the drum casing which extending vertically from an edge of the shaft sleeve section 391; the cross sections of the two end caps 39 are L-shaped, with a diameter of the shaft sleeve section 391 equivalent to the diameter of the middle section 311 of the fixed shaft, i.e., the diameter of the cylinder formed by the seal 60 and the cut-out section 312 of the fixed shaft, and a diameter of the drum sealing section 392 equivalent to a diameter of an inner wall of the drum casing 35.

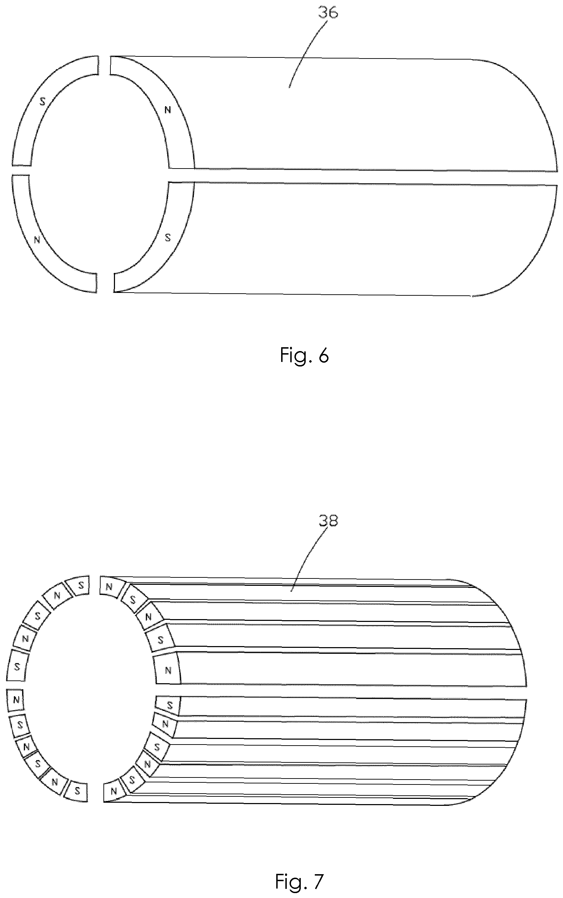

Please refer to Figs. 6 and 2, a motor rotor magnetic ring composed of a circle of N-pole and S-pole magnetic strips made of permanent magnets arranged at intervals is provided on the inner wall of the drum casing 35 of the winding roller at a position corresponding to the stator coil on the fixed shaft 31. A magnetic ring composed of two N-pole magnetic strips and two S-pole magnetic strips is illustrated in this embodiment. In other embodiments, a magnetic ring composed of different numbers of magnetic strips may also be provided according to the specific requirement of the motor. For example, in the previous embodiment, one motor rotor magnetic ring is provided, and in other embodiments, two or more magnetic rings may also be provided to expand more motor components.

Referring to Figs. 7 and 2, a motor speed measuring magnetic ring 38 composed of a circle of N-pole and S-pole magnetic strips made of permanent magnets arranged at intervals is provided on the inner wall of the drum casing 35 of the winding roller at a position corresponding to the speed measuring circuit board 37 on the fixed shaft 31. Since the accuracy requirements for the speed measurement and the driving circuit are different, the number of N-pole and S-pole magnetic strips in the motor speed measuring magnetic ring 38 is greater than the number of N-pole and S-pole magnetic strips in the motor rotor magnetic ring 36. In other embodiments, the number of detection elements of the speed measuring component 38 may be adjusted based on the accuracy.

Please refer to Fig. 2, during the assembly, the motor stator shaft sleeve 41 is mounted at one end of the middle section of the fixed shaft 31 by means of press-fitting, riveting, welding or fasteners. The motor stator 33 is fixed on the stator shaft sleeve 41 by the screws 333. In other embodiments, the motor stator 33 may also be fixed on the stator shaft sleeve 41 by means of press-fitting, riveting, welding or fasteners. The driving circuit board 34 of the motor stator is fixed on the stator shaft sleeve 41 and connected to the motor stator coil 332 electrically with the lead 42. The motor speed measuring shaft sleeve 43 is mounted at the other end of the middle section 312 of the fixed shaft 31 fixedly by means of press-fitting, riveting, welding or fasteners. The motor speed measuring circuit board 34 is fixed on the speed measuring shaft sleeve 43 by the screws 372, and a speed measuring element 371 is fixed on the speed measuring circuit board 37 and is connected to the speed measuring circuit board 37 with the lead 44. The motor rotor magnetic ring 36 and the speed measuring magnetic ring 38 are provided on the inner wall of the drum casing 35 of the winding roller respectively at a certain distance. When the fixed shaft 31 is inserted into the drum casing, a position of the motor stator coil 332 is corresponding to a position of the motor rotor magnetic ring 36, and a position of the speed measuring element 371 on the speed measuring circuit board 37 is corresponding to a position of the speed measuring magnetic ring 38. The two bearings 32 are mounted at the cut-out sections 312 of the fixed shaft 31, respectively, wherein the inner race of the bearing 32 is disposed to sleeve the cut-out section 312 of the fixed shaft, and the outer ring of the bearing 32 is fixed with the bearing seat 351 on the inner wall of the drum casing. The end cap 39 of the drum casing 35 is disposed to sleeve the cut-out section 312 of the fixed shaft 31, and the seal 60 is mounted between the shaft sleeve section 391 of the end cap and the cut-out section 312 of the fixed shaft to seal the end cap 39, wherein the lead 42 connected to the stator driving circuit board 34 passes through the gap 50 between the inner race of the bearing and the cut-out section 312 of the fixed shaft, then passes through the opening 61 of the seal 60 and runs out of the end cap 39 to extend out of the drum casing 35. The lead 44 connected to the speed measuring circuit board 37 passes through the gap 50 between the inner race of the bearing at the other end and the cut-out section 312 of the fixed shaft, then passes through the opening of the seal 60 and runs out of the end cap 39 at the other end to extend out of the drum casing 35.

During operation, the lead 42 connected to the driving circuit board 34 of the motor stator coil of the winding roller is connected to an external control circuit. After being energized, the motor stator coil 332 generates a magnetic field which interacts with a magnetic field of the motor rotor magnetic ring 36 on the inner wall of the drum casing 35 to drive the motor rotor 36 to rotate, thereby causing the drum casing 35 to rotate. The rotation of the drum casing 35 drives the yarn bobbin 2 in contact with the winding roller 3 to rotate, so as to wind the yarn onto the yarn bobbin, wherein the speed measuring element 371 mounted on the speed measuring circuit board 371 is a Hall element, which calculates a rotation speed of the winding roller motor by sensing a state change of the speed measuring component 38. The speed measuring circuit board 37 is connected to the external control circuit through the lead 44, and the external control circuit can adjust and control the speed of the winding roller according to a deviation between the rotation speed of the winding roller measured by the speed measuring unit and a set-speed.

Please refer to Fig. 8, which illustrates a structural diagram of a first embodiment of the present invention. The difference between this first embodiment and the above embodiment as shown in Figure 2 is that the structure of the speed measuring unit of the winding roller motor and the speed measuring method in this embodiment are different from those in the above embodiment. In this embodiment, a rotating part and a fixed part of the speed measuring unit are oppositely disposed along a longitudinal direction of the fixed shaft. Specifically, please refer to Figs. 8 and 9, in the second embodiment, the speed measuring unit 8 of the winding roller motor comprises a rotating part 81 fixed with the drum casing and a fixed part 82 fixed with the fixed shaft, wherein the rotating part 81 comprises a circular ring 811 extending perpendicularly to the inner wall of the drum casing 35, and a magnet 812 is provided on the circular ring 811. The fixed part 82 comprises a speed measuring shaft sleeve 821 disposed to sleeve the fixed shaft 31, a speed measuring circuit board 823 fixed on the speed measuring shaft sleeve 821 by screws 822, and a speed measuring element 824 disposed on the speed measuring circuit board 823, wherein the speed measuring circuit board 823 is fixed on the speed measuring shaft sleeve 821 in a direction perpendicular to an axis of the fixed shaft, so that the speed measuring element 824 on the speed measuring circuit board 823 is aligned with the speed measuring element 812 on the circular ring 811 along a longitudinal axis of the fixed shaft 31. In this embodiment, the speed measuring element 824 is a Hall element, and the speed measuring element 812 is a magnet. When the magnet 812 on the circular ring rotates along with the drum casing 35, a distance between the magnet 812 and the Hall element 824 changes periodically, and a magnetic field generated by the magnet 812 changes periodically. The rotation speed of the drum casing 35 can be calculated from a signal change due to a state change sensed by the Hall element 824.

In the first embodiment, the magnet 812 is fixed on the circular ring, and the Hall element is mounted on the speed measuring circuit board 823. In other embodiments, the circular ring and the speed measuring circuit board can also use a photoelectric speed measuring sensor. The photoelectric speed measuring sensor may be obtained by providing a photoelectric tube on the speed measuring circuit board 823, and providing a reflective sheet 812 on the circular ring 811. The light emitted by the photoelectric tube is reflected by the reflective sheet 812 and then received by a receiving device on the speed measuring circuit board 823 to generate a periodic pulse signal, from which the rotation speed of the drum casing 35 can be calculated. Alternatively, an opening is provided on the circular ring, and a photoelectric emitting element and a photoelectric receiving element are provided on two sides of the circular ring, respectively; when the opening of the circular ring passes by the photoelectric element, light from the photoelectric emitting element irradiates the photoelectric receiving element through the opening; and when a non-opening part of the circular ring passes by the photoelectric element, light from the photoelectric emitting element is blocked from irradiating the photoelectric receiving element, while the rotation speed of the drum casing can be calculated from a light receiving frequency of the photoelectric receiving element. Alternatively, in other embodiments, any other type of sensor, such as a vortex proximity switch sensor or a capacitive proximity switch sensor may also be used for speed measurement, which will not be illustrated here.

Please refer to Fig. 10, which illustrates a structural diagram of a further embodiment not covered by the present invention, and the difference between this embodiment and the above embodiment as shown by Figure 2 is that in this embodiment, a driving circuit board of the motor stator 33 is not provided inside the drum casing 35 of the winding roller motor. The driving circuit board 34 of the motor stator 33 is provided outside the drum casing 35 of the winding roller motor. The lead 42 is connected to an external driving circuit board 34 through the gap 50 between the bearing 32 and the cutout section 312 of the fixed shaft and the opening 61 of the seal 60 when it is connected to the stator coil 332, wherein the driving circuit board 34 of the motor stator coil 332 may also be integrated onto the control circuit board 10 of the whole machine.

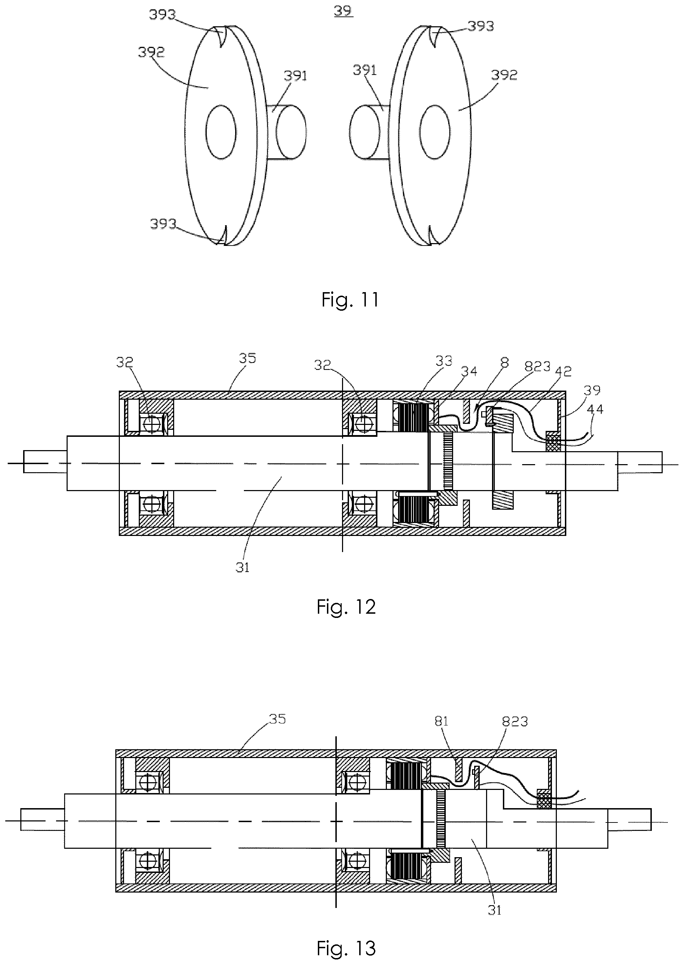

Please refer to Fig. 11, which illustrates a structural diagram of a second embodiment of the present invention. The difference between the second embodiment and the aboveembodiment as shown by Figure 2 is that in the second embodiment, the edge of the end cap 39 of the drum casing 35 of the winding roller motor is provided with a fan-blade shaped opening 393, i.e., an opening spirally and gradually changing inwards. The end cap 39 of the present invention is fixed together with the fixed shaft 31 and does not rotate. When the drum casing 35 rotates normally, the fan-blade shaped opening 393 rotates in a direction relative to the drum casing 35 so as to blow air out of the drum casing 35, so that on the one hand, heat generated in the winding roller motor can be discharged out of the drum casing 35, and on the other hand, hairy fibers entering the drum casing 35 through gaps can be removed from the interior of the drum casing 35. In the illustrated embodiment, only two opposing fan-blade shaped openings 393 are provided on each end cap 39, and in other embodiments, a plurality of fan-blade shaped openings may be provided along the edge of the end cap.

Please refer to Fig. 12, which illustrates a structural diagram of a third embodiment of the present invention. The difference between the third embodiment and the first embodiment is that in the third embodiment, the motor stator coil 33 and the speed measuring unit 8 are both located on one side of the two bearings 32 of the winding roller motor. In this way, the diameter of the inner race of either of the bearings 32 is equivalent to the diameter of the fixed shaft 31, and it is unnecessary to reserve a gap between the inner race of the bearing 32 and the fixed shaft for the lead to pass through. The lead 42 connected to the driving circuit board 34 of the motor stator and the lead 44 connected to the speed measuring circuit board 823 just need to pass through the end cap 39 at one end of the drum casing 35 only, thus the overall structure is simpler.

Please refer to Fig. 13, which illustrates a structural diagram of a fourth embodiment of the present invention. The difference between this fourth embodiment and the third embodiment is that the speed measuring circuit board 823 is not fixed on the fixed shaft 31 through the speed measuring shaft sleeve. Instead, the speed measuring shaft sleeve is cancelled, and the speed measuring circuit board 823 is directly fixed on the fixed shaft 31.

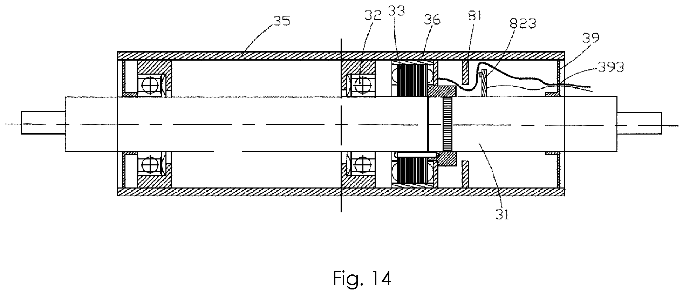

Please refer to Fig. 14, which illustrates a structural diagram of a fifth embodiment of the present invention. In this embodiment, the stator 33 and the rotor 36 of the motor are located between the bearing 32 and the end cap 39 located on the outermost side along the longitudinal direction of the fixed shaft 31. The portion of the fixed shaft 31 inside the drum casing 35 is a complete cylinder, wherein the end cap 39 close to the motor is provided with an opening 393, and the lead 42 connected to the driving circuit board 34 of the motor stator and the lead 44 connected to the motor speed measuring circuit board 823 extend out of the drum casing through the opening 393 in the end cap 39.

The foregoing embodiments of the present invention are merely exemplary descriptions made by the inventor to introduce the inventive points of the present invention. The structures of the above embodiments can also be combined with each other. For example, the third embodiment can be carried out in conjunction with the second embodiment in which the end cap is provided with fan-blade shaped opening. Alternatively, the solution of the fourth embodiment that the speed measuring circuit board is directly fixed on the fixed shaft can be combined with the solution of the first embodiment that the motor stator and the speed measuring unit are located between two bearings, and so on. In the foregoing embodiments, two bearings are provided at two ends of the drum casing, while in other embodiments, three or more bearings may be also provided inside the drum casing.

## Claims

1. A winding roller (3) for driving a bobbin of a spinning station of a textile machine to rotate, which is comprised of a spinning station of a textile machine, wherein the winding roller (3) comprises
a fixed shaft (31),
a bearing (32) mounted on the fixed shaft (31),
a drum casing (35),
end caps (39) at both ends of the drum casing (35),
a motor stator (33) fixed on the fixed shaft (31), and
an annular driving magnetic ring (36), which is composed of N-pole and S-pole magnetic strips arranged at intervals, disposed on an inner wall of the drum casing (35) at a position corresponding to the motor stator (33),
**characterized in that**
the drum casing (35) is disposed to sleeve the bearing (32), wherein the drum casing (35) is closed at both ends by the end caps (39),
a motor speed measuring unit (80) is disposed inside a winding roller motor, the speed measuring unit (80) comprising a rotating part (81) fixed on the drum casing (35) and a fixed part (82) fixed on the fixed shaft (31), wherein the rotating part (81) is provided with a first speed measuring element, the fixed part (82) is provided with a second speed measuring element (824), and the first speed measuring element and the second speed measuring element (824) are oppositely disposed in a direction parallel to a longitudinal axis of the fixed shaft (31).

2. The winding roller (3) according to claim 1, **characterized in that** the rotating part (81) comprises a fixed seat which is fixed on the inner wall of the drum casing (35) and provided with the first speed measuring element; and the fixed part (82) comprises a circuit board (823) which is fixed on the fixed shaft (31) perpendicular to the longitudinal axis of the fixed shaft (31) and provided with the second speed measuring element (824).

3. The winding roller (3) according to claim 2, **characterized in that** the fixed seat of the rotating part (81) is a circular ring perpendicular to the inner wall of the drum casing (35).

4. The winding roller (3) according to claim 2, **characterized in that** it further comprises a speed measuring shaft sleeve (821) disposed to sleeve the fixed shaft (31), and the circuit board (823) is mounted on the speed measuring shaft sleeve (821).

5. The winding roller (3) according to claim 2, **characterized in that** the first speed measuring element and the second speed measuring element (824) are proximity switch type speed measuring elements.

6. The winding roller (3) according to claim 2, **characterized in that** the first speed measuring element on the fixed seat of the rotating part (81) is a magnet, and the second speed measuring element (824) on the circuit board (823) of the fixed part (82) is a Hall element that outputs signals by sensing a magnetic field change of the magnet.

7. The winding roller (3) according to claim 2, **characterized in that** the first speed measuring element on the fixed seat of the rotating part (81) is a reflective sheet, the second speed measuring element (824) on the circuit board (823) of the fixed part (82) comprises a light signal transmitter and a reflected light receiver, and the reflected light receiver outputs different signals according to whether a light signal reflected by the reflective sheet is received or not.

8. The winding roller (3) according to claim 2, **characterized in that** the number of the first speed measuring elements is differently set based on detection accuracy requirements.

9. A textile machine, comprising a plurality of spinning stations arranged side by side, each station comprising a bobbin (2) for winding yarns and a winding roller (3) for driving the bobbin (2) to rotate, **characterized in that** the bobbin (2) at each spinning station is separately driven by an independent winding roller (3) according to any one of claims 1 to 8.

## Patentansprüche

1. Spulwalze (3) zum drehenden Antreiben einer Spule einer Spinnstelle einer Textilmaschine, welche Teil einer Spinnstelle einer Textilmaschine ist, wobei die Spulwalze (3) aufweist:
eine feststehende Welle (31),
ein Lager (32), das an der feststehenden Welle (31) angebracht ist,
ein Trommelgehäuse (35),
Endkappen (39) an beiden Enden des Trommelgehäuses (35),
einen Motorstator (33), der an der feststehenden Welle (31) angebracht ist, und
einen ringförmigen Antriebsmagnetring (36), der aus in Abständen angeordneten Nordpol- und Südpol-Magnetstreifen besteht und sich an einer Innenwand des Trommelgehäuses (35) an einer Position befindet, die dem Motorstator (33) entspricht,
**dadurch gekennzeichnet, dass**
das Trommelgehäuse (35) so angeordnet ist, dass es das Lager (32) umschließt, wobei das Trommelgehäuse (35) an beiden Enden durch die Endkappen (39) verschlossen ist,
ein Motordrehzahlmesser (80) im Innern eines Spulwalzenmotors angeordnet ist, wobei der Drehzahlmesser (80) einen drehenden Teil (81), der an dem Trommelgehäuse (35) befestigt ist, und einen feststehenden Teil (82), der an der feststehenden Welle (31) befestigt ist, aufweist, wobei der drehende Teil (81) mit einem ersten Drehzahlmesselement versehen ist, der feststehende Teil (82) mit einem zweiten Drehzahlmesselement (824) versehen ist, und das erste Drehzahlmesselement und das zweite Drehzahlmesselement (824) in einer Richtung parallel zu einer Längsachse der feststehenden Welle (31) gegenüberliegend angeordnet sind.

2. Spulwalze (3) nach Anspruch 1, **dadurch gekennzeichnet, dass** der drehende Teil (81) eine feststehende Aufnahme aufweist, die an der Innenwand des Trommelgehäuses (35) befestigt und mit dem ersten Drehzahlmesselement versehen ist; und dass der feststehende Teil (82) eine Platine (823) aufweist, die an der feststehenden Welle (31) senkrecht zur Längsachse der feststehenden Welle (31) befestigt und mit dem zweiten Drehzahlmesselement (824) versehen ist.

3. Spulwalze (3) nach Anspruch 2, **dadurch gekennzeichnet, dass** die feststehende Aufnahme des drehenden Teils (81) ein kreisförmiger Ring senkrecht zur Innenwand des Trommelgehäuses (35) ist.

4. Spulwalze (3) nach Anspruch 2, **dadurch gekennzeichnet, dass** sie weiter eine Drehzahlmesswellen-Mantelhülse (821) aufweist, die so angeordnet ist, dass sie die feststehende Welle (31) umschließt, und dass die Platine (823) an der Drehzahlmesswellen-Mantelhülse (821) angebracht ist.

5. Spulwalze (3) nach Anspruch 2, **dadurch gekennzeichnet, dass** das erste Drehzahlmesselement und das zweite Drehzahlmesselement (824) Drehzahlmesselemente vom Typ Näherungsschalter sind.

6. Spulwalze (3) nach Anspruch 2, **dadurch gekennzeichnet, dass** das erste Drehzahlmesselement an der feststehenden Aufnahme des drehenden Teils (81) ein Magnet ist und dass das zweite Drehzahlmesselement (824) auf der Platine (823) des feststehenden Teils (82) ein Hall-Element ist, dass Signale ausgibt, indem es eine Magnetfeldänderung des Magneten erfasst.

7. Spulwalze (3) nach Anspruch 2, **dadurch gekennzeichnet, dass** das erste Drehzahlmesselement an der feststehenden Aufnahme des drehenden Teils (81) eine reflektierende Folie ist, dass das zweite Drehzahlmesselement (824) auf der Platine (823) des feststehenden Teils (82) einen Lichtsignalsender und einen Reflexionslichtempfänger aufweist und dass der Reflexionslichtempfänger unterschiedliche Signale ausgibt, je nachdem, ob ein von der reflektierenden Folie reflektiertes Lichtsignal empfangen wird oder nicht.

8. Spulwalze (3) nach Anspruch 2, **dadurch gekennzeichnet, dass** die Anzahl der ersten Drehzahlmesselemente je nach Anforderung an die Erfassungsgenauigkeit unterschiedlich festgelegt wird.

9. Textilmaschine mit einer Vielzahl von nebeneinander angeordneten Spinnstellen, wobei jede Stelle eine Spule (2) zum Spulen von Garnen und eine Spulwalze (3) zum drehenden Antreiben der Spule (2) aufweist, **dadurch gekennzeichnet, dass** die Spule (2) an jeder Spinnstelle separat von einer unabhängigen Spulwalze (3) nach einem der Ansprüche 1 bis 8 angetrieben wird.

## Revendications

1. Rouleau d'enroulement (3) pour entraîner la rotation d'une bobine d'un poste de filage d'une machine textile, qui fait partie d'une station de filage d'une machine textile, dans lequel le rouleau d'enroulement (3) comprend
un arbre fixe (31),
un palier (32) monté sur l'arbre fixe (31),
une enveloppe de tambour (35),
des capuchons d'extrémités (39) aux deux extrémités de l'enveloppe de tambour (35),
un stator de moteur (33) monté sur l'arbre fixe (31) et
un anneau magnétique d'entraînement annulaire (36), composé de bandes magnétiques à pôle N et à pôle S espacées, disposé sur une paroi intérieure de l'enveloppe de tambour (35) à une position correspondant au stator de moteur (33),
**caractérisé en ce que**
l'enveloppe de tambour (35) étant disposée de manière à manchonner le palier (32), où l'enveloppe de tambour (35) est fermée aux deux extrémités par des capuchons d'extrémité (39),
une unité de mesure de la vitesse du moteur (80) est disposée à l'intérieur d'un moteur à rouleau d'enroulement, l'unité de mesure de la vitesse (80) comprenant une partie rotative (81) fixée sur l'enveloppe de tambour (35) et une partie fixe (82) fixée sur l'arbre fixe (31), dans laquelle la partie rotative (81) est pourvue d'un premier élément de mesure de la vitesse, la partie fixe (82) est pourvue d'un second élément de mesure de la vitesse (824), et le premier élément de mesure de la vitesse et le second élément de mesure de la vitesse (824) sont disposés de manière opposée dans une direction parallèle à un axe longitudinal de l'arbre fixe (31).

2. Le rouleau d'enroulement (3) selon la revendication 1, **caractérisé en ce que** la partie rotative (81) comprend un siège fixe qui est fixé sur la paroi intérieure de l'enveloppe du tambour (35) et pourvu du premier élément de mesure de la vitesse ; et la partie fixe (82) comprend une carte de circuit imprimé (823) qui est fixée sur l'arbre fixe (31) perpendiculairement à l'axe longitudinal de l'arbre fixe (31) et pourvue du deuxième élément de mesure de la vitesse (824).

3. Le rouleau d'enroulement (3) selon la revendication 2, **caractérisé en ce que** le siège fixe de la partie rotative (81) est un anneau circulaire perpendiculaire à la paroi intérieure de l'enveloppe du tambour (35).

4. Le rouleau d'enroulement (3) selon la revendication 2, **caractérisé en ce qu'**il comprend en outre un manchon d'arbre de mesure de la vitesse (821) disposé pour manchonner l'arbre fixe (31), et la carte de circuit imprimé (823) est montée sur le manchon d'arbre de mesure de la vitesse (821).

5. Le rouleau d'enroulement (3) selon la revendication 2, **caractérisé en ce que** le premier élément de mesure de la vitesse et le second élément de mesure de la vitesse (824) sont des éléments de mesure de la vitesse de type interrupteur de proximité.

6. Le rouleau d'enroulement (3) selon la revendication 2, **caractérisé en ce que** le premier élément de mesure de la vitesse sur le siège fixe de la partie rotative (81) est un aimant, et le second élément de mesure de la vitesse (824) sur le circuit imprimé (823) de la partie fixe (82) est un élément Hall qui émet des signaux en détectant un changement de champ magnétique de l'aimant.

7. Le rouleau d'enroulement (3) selon la revendication 2, **caractérisé en ce que** le premier élément de mesure de la vitesse sur le siège fixe de la partie rotative (81) est une feuille réfléchissante, le second élément de mesure de la vitesse (824) sur la carte de circuit (823) de la partie fixe (82) comprend un émetteur de signal lumineux et un récepteur de lumière réfléchie, et le récepteur de lumière réfléchie émet différents signaux en fonction de la réception ou non d'un signal lumineux réfléchi par la feuille réfléchissante.

8. Le rouleau d'enroulement (3) selon la revendication 2, **caractérisé en ce que** le nombre des premiers éléments de mesure de la vitesse est réglé différemment en fonction des exigences de précision de la détection.

9. Une machine textile comprenant plusieurs postes de filage disposés côte à côte, chaque poste comprenant un bobine (2) pour bobiner les fils et un rouleau d'enroulement (3) pour entraîner la rotation de la bobine (2), **caractérisé en ce que** la bobine (2) sur chaque poste de filage est entraînée séparément par un rouleau d'enroulement (3) indépendant selon l'une des revendications 1 à 8.
